# EUROPEAN PATENT APPLICATION

(11) **EP 4 342 830 A1**
(43) Date of publication of application: **27.03.2024**
(21) Application number: 22842395.0
(22) Date of filing: 11.07.2022
(51) Int. Cl.: B65H 5/14, H01M 10/04

(54) **SUPPORT PLATE AND PICK-AND-PLACE DEVICE COMPRISING SAME**

(30) Priority: 16.07.2021 KR 20210093791
(71) Applicant: LG Energy Solution, Ltd., Seoul 07335 (KR)
(72) Inventor: JI, Seung Hyun, Daejeon 34122 (KR)
(74) Representative: Plasseraud IP
(86) International application number: PCT/KR2022/010035
(87) International publication number: WO 2023/287133

(57) **Abstract**

A support plate according to an embodiment of the present invention may be provided so that a adsorption pad provided to adsorb an object is suspended and supported on the support plate, and be moved by a manipulator. The support plate may include a plate body; a central connection part which is disposed at a central portion of the plate body and to which the manipulator is connected from an upper side; a plurality of side connection parts which are disposed at both side portions in a width direction of the plate body and to which the adsorption pad is connected from a lower side; and a recessed groove which is provided in the plate body so as to be spaced apart from the central connection part and the side connection parts and is recessed to a predetermined depth in a thickness direction of the plate body.

## Description

### TECHNICAL FIELD

### CROSS-REFERENCE TO RELATED APPLICATION

The present application claims the benefit of the priority of Korean Patent Application No. 10-2021-0093791, filed on July 16, 2021, which is hereby incorporated by reference in its entirety.

### TECHNICAL FIELD

The present invention relates to a support plate and a pick and place apparatus including the same.

### BACKGROUND ART

In general, secondary batteries refer to batteries that are chargeable and dischargeable unlike non-rechargeable primary batteries, and are widely used in electronic devices such as mobile phones, notebook computers, and camcorders, or electric vehicles, etc. In particular, a lithium secondary battery has a larger capacity and a higher energy density per unit weight than a nickel-cadmium battery or a nickel-hydrogen battery, and thus utilization thereof is on a rapidly increasing trend.

The lithium secondary battery may be also classified according to the configuration of an electrode assembly in a positive electrode/separator/negative electrode structure. Representative examples may include a jelly-roll-type electrode assembly in a configuration where long sheet-shaped positive electrodes and negative electrodes are wound with a separator interposed therebetween, a stacked type electrode assembly in which a plurality of positive and negative electrodes cut into units having a predetermined size are stacked in sequence with a separator interposed therebetween, and a stacked/folded type electrode assembly in a configuration where bi-cells or full-cells are wound which have positive and negative electrodes in a predetermined unit stacked with a separator interposed therebetween, and so on.

Recently, a secondary battery cell, which has a structure in which the stacked type or stacked/folded type electrode assembly is embedded in a pouch-shaped battery case made of an aluminum laminate sheet, attracts a lot of interest for reasons such as low manufacture cost, small weight, and easy change in shape, and use thereof also gradually increases.

A process for manufacturing such a secondary battery cell may involve a pick and place (P&P) apparatus, and the pick and place apparatus may adsorb and move an object such as an electrode plate or a secondary battery cell.

There is Patent Document KR 10-2021-0045182 A (published April 26, 2021) as a prior art document.

### DISCLOSURE OF THE INVENTION

### TECHNICAL PROBLEM

An object of the present invention for solving the above problems is to provide a support plate, which is lightweight while being maintained in structural rigidity, and a pick and place apparatus including the support plate.

### TECHNICAL SOLUTION

A support plate according to an embodiment of the present invention may be provided so that an adsorption pad provided to adsorb an object is suspended and supported on the support plate, and be moved by a manipulator. The support plate may include a plate body; a central connection part which is disposed at a central portion of the plate body and to which the manipulator is connected from an upper side; a plurality of side connection parts which are disposed at both side portions in a width direction of the plate body and to which the adsorption pad is connected from a lower side; and a recessed groove which is provided in the plate body so as to be spaced apart from the central connection part and the side connection parts and is recessed to a predetermined depth in a thickness direction of the plate body.

The recessed groove may be disposed between the plurality of side connection parts in a longitudinal direction of the plate body.

The recessed groove may be provided in plurality. The plurality of side connection parts and a plurality of recessed grooves may be alternately disposed in a longitudinal direction of the plate body.

The recessed groove may include a first recessed groove, which is provided in one surface of the plate body, and a second recessed groove which is provided in the other surface of the plate body and faces the first recessed groove in the thickness direction of the plate body.

The first recessed groove and the second recessed groove may have the same depth.

A thickness between the first recessed groove and the second recessed groove may be about 50% or less of a thickness of the plate body.

The support plate may further include a pair of openings, which are provided at opposite sides with the central connection part therebetween in a longitudinal direction of the plate body. The openings may be disposed inside the side connection parts and the recessed grooves in the width direction of the plate body.

Each of the opening may have a size greater than that of the recessed groove.

A plurality of reinforcing ribs which divide the opening into a plurality of holes and cross each other is provided in the opening.

The plurality of reinforcing ribs may include a first reinforcing rib, which extends to be parallel to the longitudinal direction of the plate body, and a second reinforcing rib, which extends to be parallel to the width direction of the plate body and has a width greater than that of the first reinforcing rib.

A corner of an inner circumference of each of the plurality of holes may be rounded to have a predetermined radius of curvature.

The plate body may include a non-metallic plastic material.

The plate body may include a Unilate or a polycarbonate material.

A corner of an outer circumference of the plate body may be rounded to have a predetermined radius of curvature.

A support plate according to an embodiment of the present invention may include a plate body; a central connection part which is disposed at a central portion of the plate body and to which the manipulator is connected from an upper side; a plurality of side connection parts which are disposed at both side portions in a width direction of the plate body and to which the adsorption pad is connected from a lower side; and a cut-out part which is provided in the plate body so as to be spaced apart from the central connection part and the side connection parts and is recessed inward from an outer circumference of the plate body.

The cut-out part may be recessed toward a gap between the plurality of side connection parts in a longitudinal direction of the plate body.

A pick and place apparatus according to an embodiment of the present invention may adsorb and move an object. The pick and place apparatus may include an adsorption pad configured to vacuum-adsorb the object from an upper side; a support plate coupled to an upper side of the adsorption pad; and a manipulator including a plurality of links and a platform that is connected to the plurality of links and coupled to an upper side of the support plate. The support plate may include a recessed groove, which is recessed to a predetermined depth in a plate body connected to the platform and the adsorption pad, or a cut-out part which is recessed inward from an outer circumference of the plate body.

### ADVANTAGEOUS EFFECTS

According to the preferred embodiments of the present invention, the support plate may include the recessed portion to reduce the weight of the support plate. Thus, the load applied to the connection arm of the manipulator may be reduced, and the connection arm may be prevented from being broken or deformed.

Moreover, the support plate may include the opening in addition to the recessed portion to further reduce the weight of the support plate. The connection parts, to which the manipulator and the vacuum pad are connected, the opening, and the recessed portion may be arranged in the balanced manner to prevent the reduction of the structural rigidity of the support plate.

The inside of the opening may be provided with the plurality of reinforcing ribs crossing each other to maintain the high structural rigidity of the support plate.

The support plate may include the non-metallic plastic material, which has the lower density than the metal, to further reduce the weight of the support plate.

In addition, the effects may be included which could be easily predicted by those skilled in the art from the configurations according to the preferred embodiments of the present invention.

### BRIEF DESCRIPTION OF THE DRAWINGS

FIG. 1 is a side view of a pick and place apparatus according to an embodiment of the present invention.
FIG. 2 is an exploded perspective view of the pick and place apparatus according to an embodiment of the present invention.
FIG. 3 is a perspective view of a support plate according to an embodiment of the present invention.
FIG. 4 is a plan view of the support plate according to an embodiment of the present invention.
FIG. 5 is a cross-sectional view taken along a line A-A' in FIG. 4.
FIG. 6 is a perspective view of a support plate according to another embodiment of the present invention.
FIG. 7 is a plan view of the support plate according to another embodiment of the present invention.

### MODE FOR CARRYING OUT THE INVENTION

Hereinafter, preferred embodiments of the present invention will be described in detail with reference to the accompanying drawings so as to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe his or her invention in the best ways.

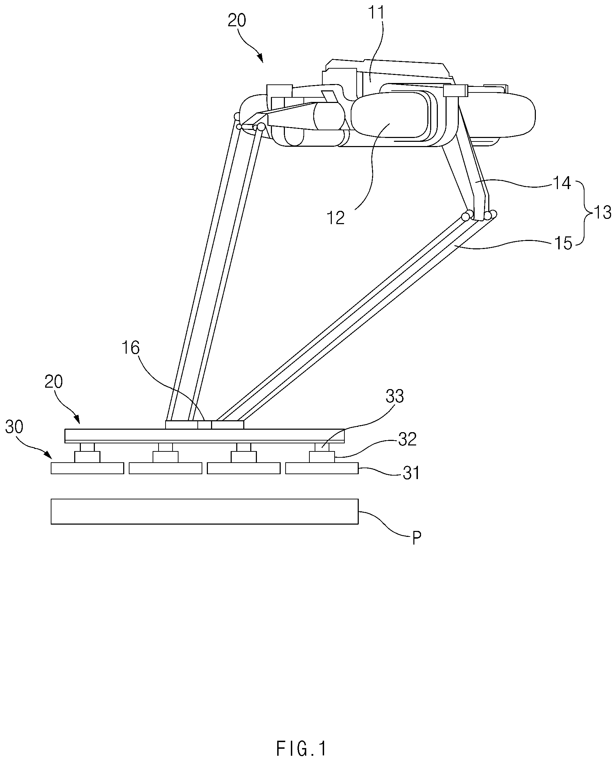

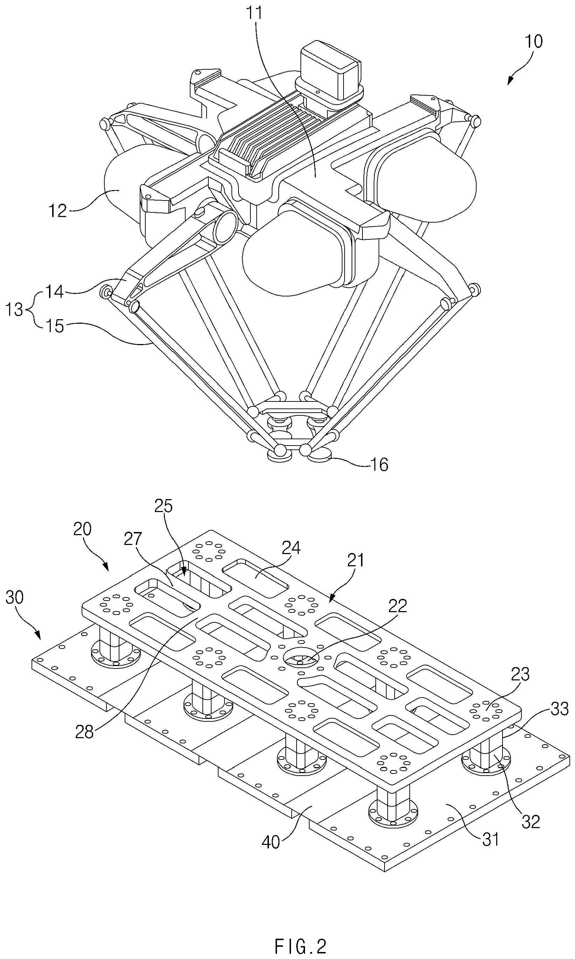

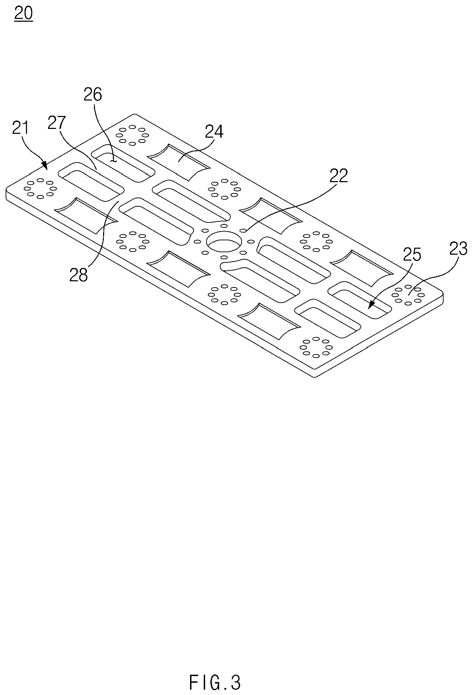

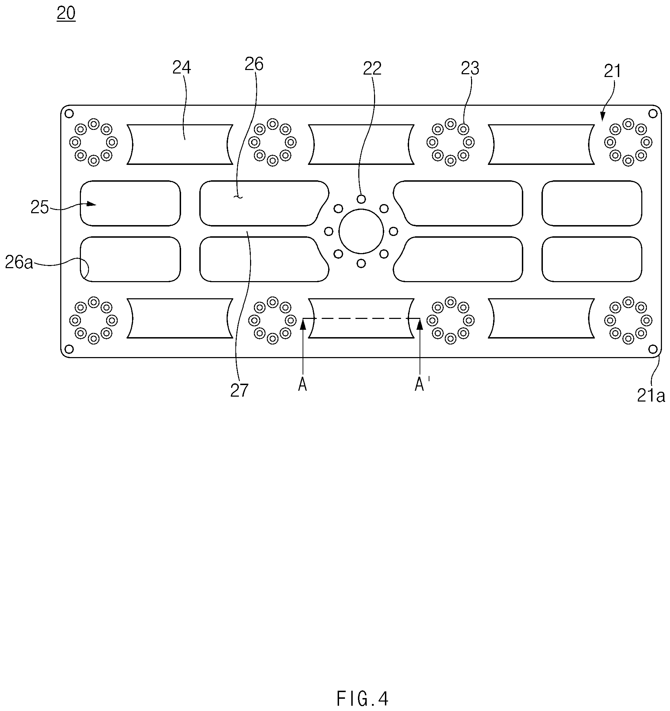

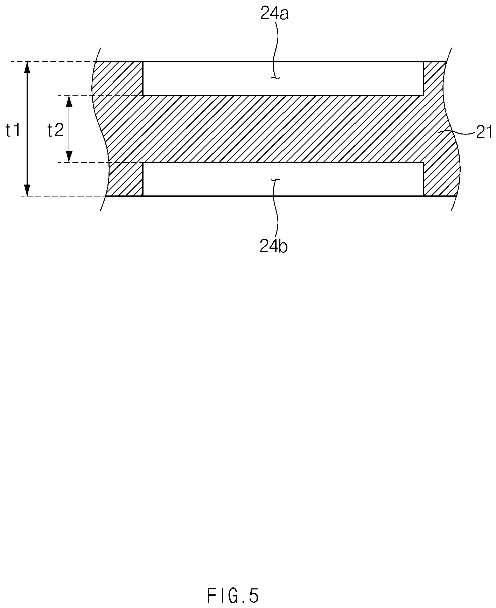

FIG. 1 is a side view of a pick and place apparatus according to an embodiment of the present invention. FIG. 2 is an exploded perspective view of the pick and place apparatus according to an embodiment of the present invention. FIG. 3 is a perspective view of a support plate according to an embodiment of the present invention. FIG. 4 is a plan view of the support plate according to an embodiment of the present invention. FIG. 5 is a cross-sectional view taken along a line A-A' in FIG. 4.

A pick and place apparatus according to an embodiment of the present invention may be an apparatus included in a system for manufacturing a secondary battery or an apparatus for transferring a manufactured secondary battery. The pick and place apparatus may adsorb and move an object P. For example, the object P may be an electrode plate, an electrode cell, or a pouch type secondary battery.

More specifically, the pick and place apparatus may include an adsorption pad 30, which adsorbs the object P from an upper side, a support plate 20 on which the adsorption pad 30 is suspended and supported, and a manipulator 10 which moves the support plate 20.

For explanation, a parallel robot will be used as an example of the manipulator 10. However, the configuration of the manipulator 10 is not limited thereto.

The manipulator 10 may include a body 11, a plurality of links 13 connected to the body 11, and a platform 16 connected to the plurality of links 13.

The body 11 may be provided with a plurality of actuators 12. Each of the actuators 12 may be a motor with a horizontal rotary shaft. The plurality of actuators 12 may be arranged along a circumferential direction of the body 11.

Each of the links 13 may be connected to the actuator 12. More specifically, the link 13 may include a driving arm 14 connected to the actuator 12, and a connection arm 15 rotatably connected to the driving arm 14.

The driving arm 14 may be provided in the body 11 so as to extend in a horizontal direction or in a downwardly inclined direction to be almost horizontal. A plurality of driving arms 14 disposed along the circumference of the body 11 may extend in different directions.

A pair of connection arms 15 parallel to each other may be connected to each of the driving arms 14.

Upper end portions of the connection arms 15 may be connected to the driving arm 14, and lower end portions thereof may be connected to the platform 16 to be described later. Preferably, the upper end portions of the connection arms 15 may be hinged to the driving arm 14, and the lower end portions may be hinged to the platform 16.

The lower end portions of a plurality of connection arms 15 may be connected in parallel along the circumference of the platform 16. The plurality of connection arms 15 connected to different driving arms 14 may extend to be closer to each other toward a downward direction.

The platform 16 may be connected to the plurality of links 13, more specifically to the plurality of connection arms 15, and move in vertical and horizontal directions according to driving of the plurality of actuators 12.

The platform 16 may be spaced apart from the body 11 to a downward direction and may be horizontally disposed. The platform 16 may have a smaller size than the body 11.

The platform 16 may be coupled to an upper side of a coupling plate 20 to be described later. That is, the platform 16 may be a component for coupling the support plate 20 to the manipulator 10.

The support plate 20 may support the adsorption pad 30 to be described later and the object P adsorbed to the adsorption pad 30. That is, the loads of the support plate 20, the adsorption pad 30, and the object P may generate a load on the links 13 of the manipulator 10, particularly on the connection arm 15. As the load is greater, an acceleration or deceleration speed of the actuator 12 may decrease and the connection arm 15 may be deformed or broken. Thus, it is required to minimize the load. The detailed configuration of the support plate 20 for minimizing the load will be described later in detail.

The adsorption pad 30 may be suspended and supported on the support plate 20 and may vacuum-adsorb the object P from an upper side.

More specifically, the adsorption pad 30 may include a pad 31 and a vacuum nozzle 32 provided on the pad 31. The adsorption pad 30 may further include a spacer 33.

The pad 31 may be horizontally disposed and may be in contact with a top surface of the object P. In order to stably lift the object P, the pad 31 may be provided in plurality so that a plurality of pads 31 are spaced apart from each other in the longitudinal direction of the support plate 20. Each of the pads 31 may be provided to be elongated in the width direction of the support plate 20. For example, four pads 31 may be suspended and supported on the support plate 20.

In this case, a gap between the plurality of pads 31 may be covered by a cover 40. The cover 40 may be made of a plastic material such as polycarbonate. Accordingly, air flow, which is generated by the vacuum nozzle 32 to be described later, may be prevented from flowing between the plurality of pads 31.

However, an embodiment of the present invention is not limited thereto, and the pads 31 may be integrally formed to have a large area.

The vacuum nozzle 32 may protrude from a top of the pad 31. The vacuum nozzle 32 may be provided in a pair so that a pair of vacuum nozzles 32 are spaced apart from each other in a longitudinal direction of each of the pads 31, i.e., in the width direction of the support plate 20. Each of the vacuum nozzles 32 may have a hollow opened to a bottom surface of the pad 31. In addition, air may flow through each of the vacuum nozzles 32, and the vacuum nozzle 32 may be connected to a high-pressure pipe (not illustrated) communicated with the hollow.

Thus, when a pump (not illustrated) connected to the high-pressure pipe adsorbs air, a adsorption force may be generated in the vacuum nozzle 32, and the object P may be kept in a state in close contact with the bottom surface of the pad 31.

In contrast, when the pump connected to the high-pressure pipe discharges air, the air may be discharged from the vacuum nozzle 32 to form air flow, and the object P may be quickly separated from the bottom surface of the pad 31. In this case, the cover 40 described above may prevent the air flow from flowing between the plurality of pads 31.

The spacer 33 may maintain a predetermined clearance between the pad 31 or the vacuum nozzle 32 and the support plate 20. The spacer 33 may be disposed on an upper side of the vacuum nozzle 32 or protrude from the upper side of the vacuum nozzle 32. The spacer 33 may be coupled to the support plate 20, more particularly to a side connection part 23 to be described later.

Alternatively, the adsorption pad 30 may not include the spacer 33. In this case, the vacuum nozzle 32 may be coupled to the support plate 20, more particularly to the side connection part 23 to be described later.

The support plate 20 according to this embodiment may include a plate body 21, a central connection part 22, the side connection part 23, and a recessed groove 24. The support plate 20 may further include an opening 25.

The plate body 21 may be horizontally disposed. The plate body 21 may be provided in the form of a rectangular plate having a pair of long sides parallel to a longitudinal direction and a pair of short sides parallel to a width direction. However, the shape of the plate body 21 is not limited thereto.

A corner 21a of the outer circumference of the plate body 21 may be rounded to have a predetermined radius of curvature. The corner 21a may connect the long side and the short side of the plate body 21 to each other. The corner 21a may be rounded to prevent a stress or load from being concentrated around the corner 21a.

The plate body 21 may include a nonmetallic material, more specifically a plastic material. Preferably, the support plate 20 may include a Unilate or a polycarbonate material. Accordingly, compared to when including a metallic material, the plate body 21 may have a smaller weight to reduce the load applied on the connection arms 15.

The central connection part 22 may be connected to the platform 16 of the manipulator 10. The central connection part 22 may be disposed at a central portion of the plate body 21. More specifically, the central connection part 22 may be disposed at a central portion with respect to the width and longitudinal directions of the plate body 21.

In one example, the central connection part 22 may include a group of a plurality of coupling holes, which are provided to constitute a ring shape at a central region of the plate body 21, and a through-hole disposed inside the ring shape. However, the configuration of the central connection part 22 is not limited thereto.

The side connection part 23 may be connected to the adsorption pad 30. The side connection part 23 may be disposed at each of both side portions in the width direction of the plate body 21. In addition, the side connection part 23 may be provided in plurality so that a plurality of side connection parts 23 are disposed at predetermined intervals along the longitudinal direction of the plate body 21.

Each of the side connection parts 22 may be constituted by a group of a plurality of coupling holes which are provided to constitute a ring shape. However, the configuration of the side connection part 22 is not limited thereto.

The recessed groove 24 may be recessed to a predetermined depth in a thickness direction of the plate body 21. Thus, due to the recessed groove 24, the weight of the support plate 20 may be smaller and the load applied on the connection arms 15 may be reduced. In addition, the structural rigidity of the support plate 20 may be prevented from being too much lowered, compared to when a through-hole having the same shape is provided in the same position.

The recessed groove 24 may be disposed in the plate body 21 to be spaced apart from the central connection part 21 and the side connection parts 22. More specifically, the recessed groove 24 may be disposed at each of both side portions in the width direction of the plate body 21. The recessed groove 24 may be provided in plurality so that a plurality of recessed grooves 24 are disposed at predetermined intervals along the longitudinal direction of the plate body 21.

Each of the recessed grooves 24 may be disposed between the plurality of side connection parts 23 in the longitudinal direction of the plate body 21. That is, the plurality of side connection parts 23 and the plurality of recessed grooves 24 may be alternately disposed in the longitudinal direction of the plate body 21.

The inner circumference of each of the recessed grooves 24 may include a recessed portion, which is recessed inwardly to correspond to the ring shape of the side connection part 22. Accordingly, an interference to the side connection part 22 may be prevented and the area of the recessed groove 24 may be maximized.

Each of the recessed grooves 24 may include a first recessed groove 24a and a second recessed groove 24b, which are recessed toward each other in two surfaces of the plate body 21 and face each other. The first recessed groove 24a may be recessed in one surface of the plate body 21, i.e., downwardly from a top surface, and the second recessed groove 24b may be recessed in the other surface of the plate body 21, i.e., upwardly from a bottom surface.

A thickness t2 between the first recessed groove 24a and the second recessed groove 24b may be about 50% or less of a thickness t1 of the plate body 21. Thus, the support plate 20 may be effectively reduced in weight.

The first recessed groove 24a and the second recessed groove 24b may have the same depth. Thus, the first recessed groove 24a and the second recessed groove 24b may be easily formed even without distinguishing the two surfaces of the plate body 21.

The opening 25 may be provided to pass through the plate body 21. More specifically, the opening 25 may be provided in a pair so that a pair of openings 25 are disposed at opposite sides with the central connection part 22 therebetween. The pair of openings 25 may have shapes symmetrical to each other. In addition, each of the openings 25 may have a greater size than the recessed groove 24.

Due to the openings 25, the weight of the support plate 20 may be further smaller and the load applied on the connection arms 15 may be further reduced.

The openings 25 may be disposed inside the side connection parts 22 and the recessed grooves 23 in the width direction of the plate body 21. Thus, the high structural rigidity of the support plate 20 may be maintained, compared to when the openings 25 are disposed at both side portions in the width direction of the support plate 20, i.e., in the positions of the recessed grooves 24.

In addition, a plurality of reinforcing ribs 27 and 28 for reinforcing the structural rigidity of the support plate 20 may be provided in the opening 25. The plurality of reinforcing ribs 27 and 28 may cross each other and may divide the opening 25 into a plurality of holes 26. For example, each of the openings 25 may be divided into four holes 26.

A corner 26a of the inner circumference of each of the plurality of holes 26 may be rounded to have a predetermined radius of curvature. Accordingly, a stress or load may be prevented from being concentrated around the corner 26a.

More specifically, the reinforcing ribs 27 and 28 may include a first reinforcing rib 27 extending to be parallel to the longitudinal direction of the plate body 21, and a second reinforcing rib 28 extending to be parallel to the width direction of the plate body 21. That is, the first reinforcing rib 27 and the second reinforcing rib 28 may perpendicularly cross each other.

The width of the second reinforcing rib 28 may be greater than the width of the first reinforcing rib 27. Thus, a bending moment, which occurs in the width direction of the plate body 21 due to the load of the adsorption pad 30 coupled to the side connection parts 23, may be effectively withstood.

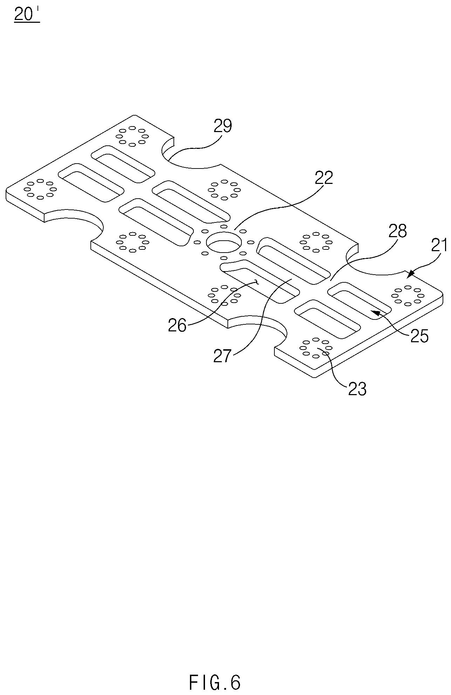

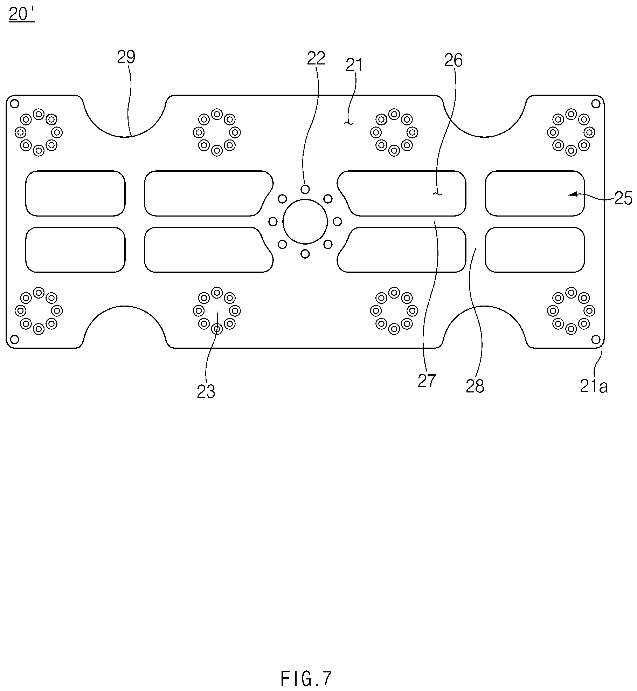

FIG. 6 is a perspective view of a support plate according to another embodiment of the present invention. FIG. 7 is a plan view of the support plate according to another embodiment of the present invention.

A support plate 20' according to this embodiment is the same as the embodiment described above, except that the support plate 20' may include a cut-out part 29 instead of a recessed groove 24. Hereinafter, duplicate description will be omitted and the description will be focused on differences.

The cut-out part 29 may be recessed inward from the outer circumference of a plate body 21. Accordingly, due to the recessed groove 24, the weight of the support plate 20 may be smaller and the load applied on a connection arm 15 may be reduced.

The cut-out part 29 may be disposed in the plate body 21 to be spaced apart from a central connection part 21 and a side connection part 22. More specifically, the cut-out part 29 may be recessed inward from each of both edges in a width direction of the plate body 21.

More specifically, the cut-out part 29 may be recessed toward a gap between a plurality of side connection parts 23 in a longitudinal direction of the plate body 21. A second reinforcing rib 28 may be disposed between a pair of cut-out parts 29 so as to compensate for the loss of the rigidity caused by the cut-out parts 29.

The inner circumference of the cut-out part 29 may be rounded. Thus, a stress or load may be prevented from being concentrated around the cut-out part 29.

The description of the present invention is intended to be illustrative, and various changes and modifications can be made by those of ordinary skill in the art to which the present invention pertains, without departing from the spirit and scope of the present invention as defined by the appended claims.

Therefore, the embodiments set forth herein are to describe the technical spirit of the present invention and not to limit. The scope of the technical spirit of the present invention is not limited by the embodiments.

Moreover, the protective scope of the present invention should be determined by reasonable interpretation of the appended claims and all technical concepts coming within the equivalency range of the present application should be interpreted to be in the scope of the right of the present application.

### [Description of the Symbols]

| | | | |
|---|---|---|---|
| 10: | Manipulator | 11: | Body |
| 12: | Actuator | 13: | Link |
| 14: | Driving arm | 15: | Connection arm |
| 16: | Platform | 20: | Support plate |
| 21: | Plate body | 22: | Central connection part |
| 23: | Side connection part | 24: | Recessed groove |
| 25: | Opening | 26: | Hole |
| 27: | First reinforcing rib | 28: | Second reinforcing rib |
| 30: | Adsorption pad | 31: | Pad |
| 32: | Vacuum nozzle | 33: | Spacer |

## Claims

1. A support plate, on which an adsorption pad configured to adsorb an object is suspended and supported and which is moved by a manipulator, the support plate comprising:
a plate body;
a central connection part which is disposed at a central portion of the plate body and to which the manipulator is connected from an upper side;
a plurality of side connection parts which are disposed at both side portions in a width direction of the plate body and to which the adsorption pad is connected from a lower side; and
a recessed groove which is provided in the plate body so as to be spaced apart from the central connection part and the side connection parts and is recessed to a predetermined depth in a thickness direction of the plate body.

2. The support plate of claim 1, wherein the recessed groove is disposed between the plurality of side connection parts in a longitudinal direction of the plate body.

3. The support plate of claim 1, wherein the recessed groove is provided in plurality,
wherein the plurality of side connection parts and a plurality of recessed grooves are alternately disposed in a longitudinal direction of the plate body.

4. The support plate of claim 1, wherein the recessed groove comprising:
a first recessed groove provided in one surface of the plate body; and
a second recessed groove provided in the other surface of the plate body and facing the first recessed groove in the thickness direction of the plate body.

5. The support plate of claim 4, wherein the first recessed groove and the second recessed groove have the same depth.

6. The support plate of claim 4, wherein a thickness between the first recessed groove and the second recessed groove is about 50% or less of a thickness of the plate body.

7. The support plate of claim 1, further comprising a pair of openings provided at opposite sides with the central connection part therebetween in a longitudinal direction of the plate body,
wherein the openings are disposed inside the side connection parts and the recessed grooves in the width direction of the plate body.

8. The support plate of claim 7, wherein each of the opening has a size greater than that of the recessed groove.

9. The support plate of claim 7, wherein a plurality of reinforcing ribs which divide the opening into a plurality of holes and cross each other is provided in the opening.

10. The support plate of claim 9, wherein the plurality of reinforcing ribs comprising:
a first reinforcing rib extending to be parallel to a longitudinal direction of the plate body; and
a second reinforcing rib extending to be parallel to the width direction of the plate body and having a width greater than that of the first reinforcing rib.

11. The support plate of claim 9, wherein a corner of an inner circumference of each of the plurality of holes is rounded to have a predetermined radius of curvature.

12. The support plate of claim 1, wherein the plate body comprises a non-metallic plastic material.

13. The support plate of claim 1, wherein the plate body comprises a Unilate or a polycarbonate material.

14. The support plate of claim 1, wherein a corner of an outer circumference of the plate body is rounded to have a predetermined radius of curvature.

15. A support plate, on which an adsorption pad configured to adsorb an object is suspended and supported and which is moved by a manipulator, the support plate comprising:
a plate body;
a central connection part which is disposed at a central portion of the plate body and to which the manipulator is connected from an upper side;
a plurality of side connection parts which are disposed at both side portions in a width direction of the plate body and to which the adsorption pad is connected from a lower side; and
a cut-out part which is provided in the plate body so as to be spaced apart from the central connection part and the side connection parts and is recessed inward from an outer circumference of the plate body.

16. The support plate of claim 15, wherein the cut-out part is recessed toward a gap between the plurality of side connection parts in a longitudinal direction of the plate body.

17. A pick and place apparatus which adsorbs and moves an object, the pick and place apparatus comprising:
an adsorption pad configured to vacuum-adsorb the object from an upper side;
a support plate coupled to an upper side of the adsorption pad; and
a manipulator comprising a plurality of links and a platform that is connected to the plurality of links and coupled to an upper side of the support plate,
wherein the support plate comprises a recessed groove, which is recessed to a predetermined depth in a plate body connected to the platform and the adsorption pad, or a cut-out part which is recessed inward from an outer circumference of the plate body.
